# EUROPÄISCHE PATENTSCHRIFT

(11) **EP 3 025 994 B1**
(45) Veröffentlichungstag und Bekanntmachung des Hinweises auf die Patenterteilung: **19.07.2017**
(21) Anmeldenummer: 14194756.4
(22) Anmeldetag: 25.11.2014
(51) Int. Cl.: B65H 31/06, B65H 33/02, B65H 31/30, B65H 29/14

(54) **Vorrichtung und Verfahren zum Herstellen von Stapelpaketen aus einzelnen Signaturen**
Device and method for manufacturing stacks of packages of individual signatures
Dispositif et procédé de fabrication de paquets empilés de feuilles imprimées

(43) Veröffentlichungstag der Anmeldung: 01.06.2016
(73) Patentinhaber: Maschinenbau Oppenweiler Binder GmbH & Co. KG, 71570 Oppenweiler (DE)
(72) Erfinder: Tegtmeier, Bodo, 73553 Alfdorf (DE); Krawtschuk, Jochen, 71540 Murrhardt (DE); Haug, Olaf, 73663 Berglen (DE)
(74) Vertreter: Wächter, Jochen

(56) Entgegenhaltungen:
- US-A- 1 603 294
- US-A1- 2003 234 485

## Beschreibung

Die vorliegende Erfindung betrifft eine Vorrichtung und ein Verfahren zum Herstellen von Stapelpaketen, insbesondere in Form von Stangen, die eine Vielzahl von einzelnen Signaturen aufweisen.

Eine Vorrichtung zum Stapeln von Signaturen ist beispielsweise in der DE 697 12 364 T4 beschrieben. Die Signaturen werden zunächst mit einer Fördereinheit über eine im Wesentlichen bogenförmige Signatur-Bahn von einer horizontalen Lage in eine vertikale Lage bewegt und auf einem Stapeltisch gestapelt. Oberhalb des Stapeltisches weist die Signatur-Bahn einen vertikalen Endabschnitt auf, sodass die Signaturen im Wesentlichen vertikal auf dem Stapeltisch gestapelt werden. Durch das Aneinanderreihen von Signaturen werden sogenannte Stangen gebildet, die anschließend durch Umreifung zusammengedrückt und verpackt werden.

Eine ähnliche Vorrichtung, die Signaturen in Form einer Stange stapelt, ist in der DE 600 04 631 T2 oder in der US 2003/0234485 A1 offenbart.

Diese Vorrichtungen arbeiten in der Regel mit einer Fördervorrichtung, die die Signaturen im Strom geschuppt, d.h. in aneinandergrenzenden Bereichen übereinander liegend, an den Stapeltisch herantransportiert. Problematisch ist hierbei, dass bei frisch gedruckten Signaturen, wenn diese geschuppt befördert werden, Druckfarbe auf die benachbarten Signaturen übertragen werden kann.

Aus diesem Grunde wäre für solche Anwendungsgebiete die Einzelbogenzufuhr zu bevorzugen, bei der die Signaturen vereinzelt nacheinander transportiert werden, siehe z.B. die US 1 603 294 A. Hierbei sind jedoch im Bereich der Abstapelung Probleme der Verkantung neu eintreffender Signaturen mit den bereits dort abgestapelten Signaturen zu erwarten, da die ansonsten durch die Schuppung erzielte Führung der jeweils nachfolgenden Signatur entfällt.

Der vorliegenden Erfindung liegt die Aufgabe zugrunde, eine Vorrichtung zum Herstellen von Stapelpaketen zu schaffen, mit der eine störungsfreie Stapelung von einzeln herantransportierten Signaturen ermöglicht wird, ohne dass beim Stapeln ein Verkanten der herantransportierten Signaturen mit den bereits auf dem Stapeltisch gestapelten Signaturen auftritt. Außerdem soll ein entsprechendes Verfahren zum Herstellen von Stapelpaketen angegeben werden.

Diese Aufgabe wird durch die Merkmale des Anspruchs 1 bzw. des Anspruchs 12 gelöst.

Erfindungsgemäß umfasst die Vorrichtung zum Herstellen von Stapelpaketen, insbesondere in Form von Stangen, die aus einer Vielzahl von einzelnen Signaturen bestehen, eine erste Fördereinheit. Die erste Fördereinheit definiert eine Signatur-Bahn, wobei die erste Fördereinheit die Signaturen entlang der Signatur-Bahn in eine vertikale Lage bewegt. Die Vorrichtung umfasst weiterhin einen Stapeltisch, der eine Auflagefläche zum Stützen der vertikal herantransportierten Signaturen aufweist. Der Stapeltisch weist eine zweite Fördereinheit auf, die die in Form einer Stange gestapelten Signaturen in einer Förderrichtung des Stapels bewegt. Des Weiteren umfasst die Vorrichtung eine Neigeeinrichtung zum Neigen oder Zusammendrücken eines oberen Bereichs der gestapelten Signaturen. Die Neigeeinrichtung ist oberhalb der Auflagefläche angeordnet und weist einen vorbestimmten vertikalen Abstand zur Auflagefläche auf. Eine Steuereinrichtung schaltet die Neigeeinrichtung zwischen einem aktiven Zustand, in dem die Neigeeinrichtung die gestapelten Signaturen neigt, und einem inaktiven Zustand, in dem keine Einwirkung der Neigeeinrichtung auf die gestapelten Signaturen stattfindet.

Mit dieser Ausgestaltung wird durch die Neigeeinrichtung erreicht, dass die Signaturen derart in Förderrichtung des Stapels geneigt werden, dass nachfolgende Signaturen, die im Stapel an bereits abgestapelte Signaturen anschließen sollen, ohne mit diesen zu verkanten auf der Auflagefläche des Stapeltisches abgestellt werden können.

Damit unterschiedlich große Signaturen gestapelt werden können, ist die Neigeeinrichtung vorzugsweise höhenverstellbar angeordnet.

Besonders von Vorteil ist es, wenn der vorbestimmte vertikale Abstand zwischen der Neigeeinrichtung und der mindestens einen Auflagefläche zwischen 6 cm und 30 cm beträgt. Durch den vorbestimmten vertikalen Abstand der Neigeeinrichtung wird erreicht, dass die Signaturen an einem optimalen Punkt in einem oberen Bereich der Signaturen geneigt werden, sodass ein mögliches Verkanten mit den nachfolgenden Signaturen ausgeschlossen ist.

Vorzugsweise bewirkt die Signatur-Bahn eine Umlenkung der Signaturen um im Wesentlichen 270°. Durch die Umlenkung um im Wesentlichen 270° werden die Signaturen von einer horizontalen Lage in eine vertikale Lage bewegt, in der sie dann gestapelt werden.

Die Vorrichtung weist vorzugsweise auch einen Sensor auf, der stromauf der Neigeeinrichtung im Bereich der Signatur-Bahn angeordnet ist und darauf ausgerichtet ist, einen Durchtritt jeder Signatur festzustellen und ein entsprechendes Signal an die Steuereinrichtung zu übermitteln. Der Sensor kann als Trigger eingesetzt werden und steuert die Neigeeinrichtung derart, dass bei einem Variieren der Abstände zwischen den einzeln heranbeförderten Signaturen ein optimales Schalten zwischen dem aktiven und dem inaktiven Zustand der Neigeeinrichtung gewährleistet ist.

Besonders vorteilhaft ist es, wenn die Steuereinheit darauf ausgerichtet ist, auf Basis des Sensorsignals, der Geschwindigkeit der ersten Fördereinheit und eines Abstandes zwischen dem Sensor und der Neigeeinrichtung die Neigeeinrichtung in den inaktiven Zustand und anschließend wieder in den aktiven Zustand zu schalten.

Die Signatur-Bahn weist vorzugsweise oberhalb der Auflagefläche einen vertikalen Endabschnitt auf und der Sensor ist stromauf des vertikalen Endabschnitts und nahe am vertikalen Endabschnitt angeordnet. Dadurch wird gewährleistet, dass der Abstand zwischen dem Sensor und der Neigeeinrichtung so gering wie möglich gehalten wird, damit Ungenauigkeiten bei der Steuerung vermieden werden.

Besonders vorteilhaft ist es, wenn die Neigeeinrichtung mindestens einen Schiebestößel aufweist. Der mindestens eine Schiebestößel ist eine mechanisch einfache Lösung der Neigeeinrichtung.

Damit die Signaturen beim Neigen nicht beschädigt werden, weist der mindestens eine Schiebestößel vorzugsweise ein kantenfreies Profil auf.

Vorteilhafterweise ist der mindestens eine Schiebestößel in dem aktiven Zustand in Förderrichtung des Stapels über den vertikalen Endabschnitt der Signatur-Bahn hinaus ausgefahren, während er in dem inaktiven Zustand hinter den vertikalen Endabschnitt der Signatur-Bahn zurückgezogen ist und somit die Signaturen nicht berührt.

Damit einem Verkanten der Signaturen entgegengewirkt wird, neigt die Neigeeinrichtung die Signaturen vorteilhafterweise in einer Neigerichtung, die der Förderrichtung des Stapels entspricht.

Erfindungsgemäß umfasst das Verfahren zum Herstellen von Stapelpaketen, insbesondere in Form von Stangen, die aus einer Vielzahl von einzelnen Signaturen bestehen, folgende Schritte:
- Fördern der vereinzelten Signaturen entlang einer Signatur-Bahn mit einer ersten Fördereinheit, wobei die Signaturen in eine vertikale Lage gebracht werden,
- anschließendes Abstellen der vertikal herantransportierten Signaturen auf einer Auflagefläche eines Stapeltisches zur Bildung eines Stapels von Signaturen, und
- Weiterfördern der gestapelten Signaturen in einer Förderrichtung des Stapels mittels einer zweiten Fördereinheit,
- wobei bei der Stapelbildung eine Neigeeinrichtung zwischen dem aktiven Zustand, in dem die Neigeeinrichtung einen oberen Bereich der gestapelten Signaturen neigt oder zusammendrückt, und einem inaktiven Zustand, in dem keine Einwirkung der Neigeeinrichtung auf die Signaturen stattfindet, geschaltet wird.

Mit diesem Verfahren wird gewährleistet, dass sich die einzeln einlaufenden Signaturen beim Stapeln auf der Auflagefläche des Stapeltisches nicht verkanten und somit ein störungsfreier Betrieb der Vorrichtung gewährleistet werden kann.

Besonders vorteilhaft ist es, wenn ein Sensor zum Feststellen eines Durchtritts einer Signatur und zum Senden eines entsprechenden Signals an die Steuereinheit stromauf der Neigeeinrichtung im Bereich der Signatur-Bahn angeordnet ist. Die Steuereinheit schaltet die Neigeeinrichtung auf Basis des Sensorsignals, der Geschwindigkeit der ersten Fördereinheit und eines Abstandes zwischen dem Sensor und der Neigeeinrichtung in den inaktiven Zustand und anschließend wieder in den aktiven Zustand. Dadurch wird erreicht, dass die Neigeeinrichtung rechtzeitig deaktiviert wird, wenn eine neue Signatur auf dem Stapeltisch abgestellt werden soll. Die Neigeeinrichtung wird ruckartig deaktiviert, sodass sie die neue Signatur auf ihrem Weg nicht mehr behindert. Gleichzeitig muss der Zeitpunkt der Deaktivierung so gewählt werden, dass der Stapel aus seiner geneigten Position noch nicht wieder vollständig zurückgestellt ist, wenn die neue Signatur eintrifft. Hierbei wird also die Masseträgheit des Signaturstapels ausgenutzt.

Vorzugsweise weist die Neigeeinrichtung mindestens einen Schiebestößel auf, der beim Schalten in den aktiven Zustand in Förderrichtung des Stapels über einen vertikalen Endabschnitt der Signatur-Bahn hinaus ausgefahren wird, während er in dem inaktiven Zustand hinter den vertikalen Endabschnitt der Signatur-Bahn zurückgezogen wird und somit die Signaturen nicht berührt.

Weitere Merkmale und Vorteile der vorliegenden Erfindung ergeben sich aus der nachfolgenden Beschreibung unter Bezugnahme auf die Zeichnungen.
- Fig. 1: ist eine schematische Querschnittsansicht einer Ausführungsform der erfindungsgemäßen Vorrichtung zum Herstellen von Stapelpaketen in Form von Stangen aus einer Vielzahl einzelner Signaturen;
- Fig. 2: ist eine vergrößerte Querschnittsansicht der relevanten Teile einer ähnlichen Ausführungsform der Vorrichtung wie in Fig. 1; und
- Fig. 3: ist eine weiter vergrößerte Darstellung einer bevorzugten Ausführungsform der Neigeeinrichtung.

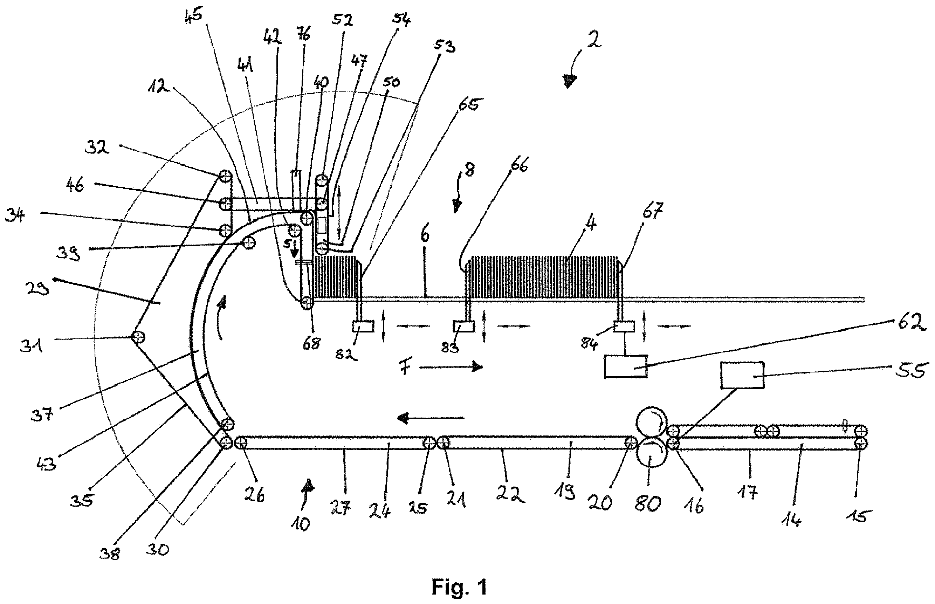

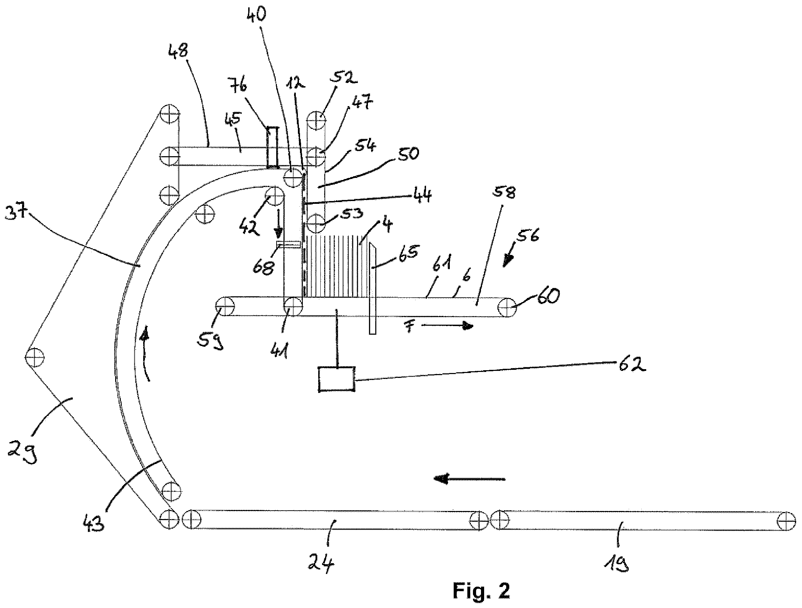

Fig. 1 und 2 zeigen den grundsätzlichen schematischen Aufbau einer Ausführungsform der erfindungsgemäßen Vorrichtung 2. Die Vorrichtung 2 dient dazu, vereinzelt herantransportierte Signaturen 4 entlang einer Signatur-Bahn 12 von einer horizontalen Lage in eine vertikale Lage zu bewegen und die Signaturen 4 hochkant auf einer Auflagefläche 6 eines Stapeltisches 8 abzustellen. Unter "Signaturen" 4 werden unter anderem Bogen, Hefte, Druckprodukte wie beispielsweise Broschüren, Buchblöcke, Zeitschriften oder Zeitungen verstanden. Unter dem Begriff "Stapeln" wird das Aneinanderreihen von einzelnen Signaturen 4 verstanden, wobei eine Reihe, die aus mehreren aneinander gestapelten Signaturen 4 besteht, eine sogenannte Stange bildet.

Die Vorrichtung 2 weist eine Fördereinheit 10 auf. Die Fördereinheit 10 dient dazu, die einzelnen Signaturen 4 entlang der Signatur-Bahn 12 von einer horizontalen Lage in eine vertikale Lage zu bewegen. Details der Ausgestaltung der Fördereinheit 10 können im Rahmen der Erfindung variieren.

In Fig. 1 umfasst die Fördereinheit 10 mehrere aneinandergereihte Transportsysteme 14, 19, 24, 29, 37, 45, 50. Beginnend unten rechts sind drei Transportsysteme 14, 19, 24 in horizontaler Richtung aneinandergereiht. Jedes der Transportsysteme 14, 19, 24 umfasst ein Paar an zumindest teilweise angetriebenen Riemenrädern 15, 16; 20, 21; 25, 26 und einen Riemen 17, 22, 27. Die Riemen 17, 22, 27 umspannen die jeweiligen Riemenräder 15, 16; 20, 21; 25, 26. Die Transportsysteme 14, 19, 24 können zudem Mittel zum Erzeugen eines Unterdrucks aufweisen und die Signaturen 4 während des Fortbewegens ansaugen. Alternativ ist auch vorstellbar, ähnlich wie beim Transportsystem 14 dargestellt ist, bei den Transportsystemen 14, 19, 24 jeweils weitere, gegenüberliegende Riemen vorgesehen sind, die sich in der anderen Umlaufrichtung drehen wie die Riemen 17, 22, 27. Die Signaturen 4 werden dann im Sandwich geführt. Ebenso können sie nur mit einem Unterband geführt werden.

Es können auch weitere Komponenten, wie beispielsweise Presswalzen 80 oder Durchgangssensoren, entlang der Signatur-Bahn 12 angeordnet sein.

Anschließend lenkt die Fördereinheit 10 die Signaturen 4 um 270° von der horizontalen Lage in die vertikale Lage um. Hierfür existieren mehrere bekannte Ausgestaltungen. Im dargestellten Beispielsfall geschieht dies durch ein Zusammenwirken der Transportsysteme 29, 37, 45 und 50.

Das Transportsystem 29 umfasst Riemenräder 30, 31, 32, 34 und einen Riemen 35. Auch das Transportsystem 37 weist Riemenräder 38, 39, 40, 41, 42 und einen Riemen 43 auf. Die Transportsysteme 29, 37 sind gegensinnig angetrieben und fördern die Signaturen 4 im Sandwich. In dem Bereich, in dem der Riemen 35 angrenzend an den Riemen 43 angeordnet ist, wird von beiden eine Krümmung durchlaufen, der vorzugsweise die Form eines Kreisbogenabschnitts aufweist.

Anschließend an den Kreisbogenabschnitt wird die Signatur 4 durch den Riemen 43 entlang einer gekrümmten Bahn weitertransportiert, wobei ein weiteres Transportsystem 45 mit Riemenrädern 46 und 47 sowie einem horizontal verlaufenden Riemen 48 unterstützend mitwirkt. Die Signaturen 4 sind in diesem Bereich zwischen den Riemen 48 und 43 geführt.

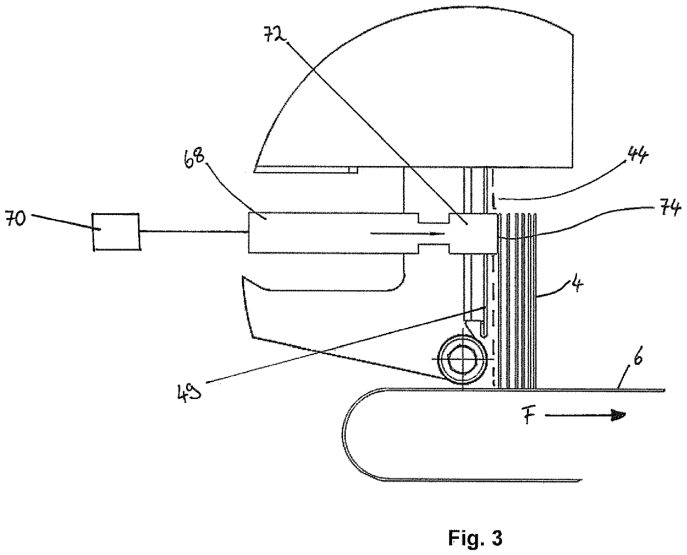

Die beiden Riemenräder 40, 42 bilden dann den Übergang zu einem vertikalen Endabschnitt 44 der Signatur-Bahn 12, der in Fig. 2 und 3 gestrichelt eingezeichnet ist. Hierzu ist der Riemen 43 um die Riemenräder 40 ,42 umgelenkt und verläuft bis hin zu dem Riemenrad 41. Das Riemenrad 41 ist im Bereich der Auflagefläche 6 des Stapeltisches 8, vorzugsweise knapp dahinter, angeordnet. Die Signatur-Bahn 12 erfährt in dem Bereich somit eine Umlenkung um im Wesentlichen 90° von der Horizontalen in die Vertikale.

Im oberen Bereich des vertikalen Endabschnitts 44 ist parallel zum Riemen 43 ein Riemen 54 eines weiteren, vertikal verlaufenden Transportsystems 50 angeordnet. Das Transportsystem 50 umfasst Riemenräder 52, 53, um die der Riemen 54 verläuft. Im oberen Bereich des vertikalen Endabschnitts 44 werden die Signaturen 4 somit im Sandwich zwischen den Riemen 43 und 54 geführt. Das Transportsystem 50 endet in einem Abstand über einer Auflagefläche 6 des Stapeltisches 8, damit die gestapelten Signaturen 4 horizontal darunter bewegt werden können. Das Transportsystem 50 ist höhenverstellbar angeordnet und kann somit auf die unterschiedlichen Längen der einzelnen Signaturen 4 eingestellt werden. Die Förderrichtung S der Fördereinheit 10 im Bereich des vertikalen Endabschnitts 44 verläuft entsprechend vertikal nach unten.

Die Antriebe der Fördereinheit 10 werden über eine gemeinsame Steuerung 55 angesteuert. Die Fördereinheit 10 kann nur über einen Antrieb oder über mehrere Antriebe verfügen.

Im unteren Bereich des vertikalen Endabschnitts 44 der Signatur-Bahn 12 können auch fest montierte Führungsleisten 49 (siehe Fig. 3) die Führungsfunktion bis fast zur Auflagefläche 6 des Stapeltisches 8 übernehmen. Die Auflagefläche 6 des Stapeltisches 8 erstreckt sich in horizontaler Richtung weg von dem vertikalen Endabschnitt 44 in einer Förderrichtung F des Stapels. Auf der Auflagefläche 6 werden die vertikal herantransportierten Signaturen 4 gestützt bzw. abgestellt und zu einem Stapel gestapelt.

Üblicherweise ist die Auflagefläche 6 als eine Platte ausgebildet, auf der die Signaturen 4 verschoben werden (siehe Fig. 1). Die Auflagefläche 6 des Stapeltisches 8 kann aber auch ein in Förderrichtung F bewegbares Element sein, beispielsweise als Teil eines weiteren Transportsystems 58 (siehe Fig. 2). In Fig. 2 umfasst das Transportsystem 58 zwei Rollen 59, 60 sowie ein umlaufendes Transportband 61.

In jedem Fall weist der Stapeltisch 8 eine zweite Fördereinheit 56 auf, die die in Form einer Stange gestapelten Signaturen 4 in einer Förderrichtung F des Stapels bewegt. Hierfür existieren verschiedene dem Fachmann bekannte Möglichkeiten. In der in Fig. 1 dargestellten Ausführungsform umfasst die zweite Fördereinheit 56 drei vertikale Halteelemente 65, 66, 67, die zum seitlichen Abstützen der gestapelten Signaturen 4 dienen. Die Halteelemente 65, 66, 67 erstrecken sich während ihres Einsatzes von unterhalb der Auflagefläche 6 bis über die Auflagefläche 6 des Stapeltisches 8 hinaus. Für den Durchtritt der Halteelemente 65, 66, 67 sind vorzugsweise Aussparungen in der Auflagefläche 6 vorgesehen. Idealerweise sind die Halteelemente 65, 66, 67 während ihres Einsatzes derart ausgefahren, dass sie die Signaturen 4 über deren gesamte Länge stützen.

Während der Stapelbildung wird eines der Halteelemente 65, 66, 67 benötigt, um die in Förderrichtung F vordere Grenze des Stapels zu bilden. Sobald der Stapel vollständig ist, wird zusätzlich ein weiteres der Halteelemente 65, 66, 67 als in Förderrichtung F hintere Grenze des Stapels benötigt. Der fertige Stapel wird dann in Förderrichtung F verschoben, wie in Fig. 1 oben Mitte zu sehen ist. Während der fertige Stapel verschoben wird, bildet das dritte der Halteelemente 65, 66, 67 bereits wieder die in Förderrichtung F vordere Grenze des nächsten Stapels.

Jedes Halteelement 65, 66, 67 ist unabhängig von den anderen bewegbar und ist dazu mit einem Schlitten 82, 83, 84 verbunden. Die Schlitten 82, 83, 84 sind entlang der Förderrichtung F hin- und herbewegbar.

Wenn ein Halteelement 65, 66, 67 in die Ausgangsposition zurückgefahren werden soll, muss es unter die Auflagefläche 6 des Stapeltisches 8 eingezogen sein, damit der entsprechende Schlitten 82, 83, 84 ungehindert bewegt werden kann.

Im Falle der Fig. 2 gehört zusätzlich auch das Transportsystem 58 zur zweiten Fördereinheit 56.

Sämtliche Bewegungen der zweiten Fördereinheit 56 werden vorzugsweise über eine einzige Steuerung 62 gesteuert. Die Steuerung 62 kann mit der Steuerung 55 als eine Einheit ausgebildet sein.

Erfindungsgemäß weist die Vorrichtung 2 zudem eine Neigeeinrichtung 68 auf, die zum Neigen oder Zusammendrücken eines oberen Bereichs der gestapelten Signaturen 4 dient und unter Bezugnahme auf Fig. 3 näher beschrieben wird.

Die Neigeeinrichtung 68 ist oberhalb der Auflagefläche 6 des Stapeltisches 8 im Bereich des vertikalen Endabschnitts 44 der Signatur-Bahn 12 angeordnet. Die Neigeeinrichtung 68 weist einen vorbestimmten vertikalen Abstand zur Auflagefläche 6 des Stapeltisches 8 auf. Damit die Neigeeinrichtung 68 jeweils an einem oberen Bereich der gestapelten Signaturen 4 angreifen kann, ist die Neigeeinrichtung 68 höhenverstellbar angeordnet. Vorteilhafterweise beträgt der vorbestimmte vertikale Abstand zwischen der Neigeeinrichtung 68 und der Auflagefläche 6 zwischen 6 cm und 30 cm.

Die Vorrichtung 2 weist weiterhin eine Steuereinrichtung 70 auf, die die Neigeeinrichtung 68 zwischen einem aktiven Zustand und einem inaktiven Zustand schaltet. Die Steuereinrichtung 70 kann mit einer der Steuerungen 55, 62 oder beiden Steuerungen 55, 62 als eine Einheit ausgebildet sein.

In dem aktiven Zustand neigt die Neigeeinrichtung 68 die Signaturen 4 in Förderrichtung F, während in dem inaktiven Zustand keine Einwirkung der Neigeeinrichtung 68 auf die Signaturen 4 stattfindet.

In der in Fig. 3 dargestellten bevorzugten Ausführungsform weist die Neigeeinrichtung 68 mindestens einen Schiebestößel 72 auf. Der mindestens eine Schiebestößel 72 ist in horizontaler Richtung hin- und herbewegbar. Vorzugsweise weist sie mehrere Schiebestößel 72 auf, die seitlich versetzt auf derselben Höhe angeordnet sind. Der mindestens eine Schiebestößel 72 muss in Förderrichtung F an den Führungsleisten 49 und/oder dem Riemen 43 vorbei bewegt werden können. Damit die einzelnen Signaturen 4 während des Neigevorgangs nicht beschädigt werden, weist der mindestens eine Schiebestößel 72 eine Schiebefläche 74 mit einem kantenfreien Profil auf. Die Schiebefläche 74 ist vorzugsweise als glatte, vertikal ausgerichtete Oberfläche ausgebildet.

In dem aktiven Zustand ist der mindestens eine Schiebestößel 72 in Förderrichtung F des Stapels über den vertikalen Endabschnitt 44 der Signatur-Bahn 12 hinaus ausgefahren und berührt und neigt die Signaturen 4 in der Förderrichtung F. In dem inaktiven Zustand ist der Schiebestößel 72 hinter den vertikalen Endabschnitt 44 der Signatur-Bahn 12 zurückgezogen und berührt somit die Signaturen 4 nicht. Die Ansicht in Fig. 3 zeigt einen Zustand beim Ausfahren des mindestens einen Schiebestößels 72, kurz bevor der mindestens eine Schiebestößel 72 die Signaturen 4 mit seiner Schiebefläche 74 berührt. Bei weiterem Ausfahren des mindestens einen Schiebestößels 72 nach rechts wird der obere Bereich der gestapelten Signaturen 4 nach rechts zusammengedrückt bzw. geneigt. Im inaktiven Zustand ist der mindestens eine Schiebestößel 72 weiter nach links zurückgezogen als in Fig. 3 dargestellt.

Um zu gewährleisten, dass nachfolgende Signaturen 4 auf der Auflagefläche 6 des Stapeltisches 8 als weitere Elemente eines bereits existierenden Stapels abgestellt werden können, ohne mit den bereits im Stapel befindlichen Signaturen 4 zu verkanten, muss ein zeitlich optimiertes Schalten zwischen dem aktiven und dem inaktiven Zustand der Neigeeinrichtung 68 erfolgen. Wenn eine neue Signatur 4 auf dem Stapeltisch abgestellt werden soll, muss die Neigeeinrichtung 68 genau zum richtigen Zeitpunkt deaktiviert werden. Die Neigeeinrichtung 68 wird so deaktiviert, dass sie die neue Signatur 4 auf ihrem Weg zum Stapel nicht behindert, gleichzeitig aber der Stapel aus seiner im oberen Bereich geneigten bzw. zusammengedrückten Position noch nicht wieder vollständig zurückgestellt ist, wenn die neue Signatur 4 eintrifft. Hierbei wird die Massenträgheit des Signaturstapels ausgenutzt. Die noch etwas gebogene hintere Flanke des Stapels bildet somit eine Art vordere Führungshilfe für die neu eintreffende Signatur 4.

Bei Signaturen, die mit absolut identischer Geschwindigkeit und in gleichmäßigen Abständen von der ersten Fördereinheit 10 herantransportiert werden, kann die Aktivierung und Deaktivierung der Neigeeinrichtung 68 unter Umständen nach einem voreingestellten Muster erfolgen.

Bevorzugt ist es aber, einen Sensor 76 im Bereich der Signatur-Bahn 12 vorzusehen, der einen Durchtritt einer Signatur 4 feststellt und ein entsprechendes Signal an die Steuereinrichtung 70 abgibt. Der Sensor kann somit als Trigger eingesetzt werden und ist die Basis einer Ansteuerung der Neigeeinrichtung 68, sodass auch bei einem Variieren der Abstände zwischen den einzeln heranbeförderten Signaturen 4 keine Probleme auftreten.

Der Sensor 76 kann als Lichtschranke ausgebildet sein, beispielsweise als Infrarot-Lichtschranke. Der Sensor 76 ist vorteilhafterweise stromauf der Neigeeinrichtung 68 und des vertikalen Endabschnitts 44 der Signatur-Bahn 12 und nahe am vertikalen Endabschnitt 44 angeordnet. Idealerweise ist der Sensor 76 im Bereich des Riemenrads 40 angeordnet, sodass er den Durchtritt der Signaturen 4 kurz vor dem Übergang in den vertikalen Endabschnitt 44 feststellen kann. Andere Positionen des Sensors 76 sind aber ebenso möglich.

Die Steuereinrichtung 70 benötigt neben dem Sensorsignal als weitere Informationen in der Regel noch die Geschwindigkeit der ersten Fördereinheit 10 und den Abstand zwischen dem Sensor 76 und der Neigeeinrichtung 68.

Bei Durchtritt einer Signatur 4 durch den Bereich des Sensors 76 schaltet die Steuereinheit 70 mit entsprechender zeitlicher Verzögerung die Neigeeinrichtung 68 in den inaktiven Zustand und anschließend, nach dem Eintreffen der neuen Signatur 4 im Bereich des Stapels, wieder in den aktiven Zustand.

Im Folgenden wird der Ablauf des Herstellens der Stapelpakete näher beschrieben.

Die Signaturen 4 werden nacheinander, vorzugsweise mit einem vorbestimmten Abstand zueinander, entlang der Signatur-Bahn 12 bewegt. In der Regel werden die Signaturen 4 in der Fördereinheit 10 mit ihrem Hauptfalz voraus gefördert, sodass der Hauptfalz beim Stapeln auf der Auflagefläche 6 des Stapeltisches 8 aufliegt. Bevor die Signatur 4 in den vertikalen Endabschnitt 44 eintritt, passiert die Signatur 4 den Sensor 76. Der Sensor 76 stellt den Durchtritt der Signatur 4 fest und übermittelt ein entsprechendes Signal an die Steuereinrichtung 70.

Die Steuereinrichtung 70, die das Signal von dem Sensor 76 erhalten hat, schaltet auf Basis des eingegangenen Signals und gegebenenfalls weiterer Prozessparameter die Neigeeinrichtung 68 aus dem aktiven Zustand, in dem die Signaturen 4 mittels der Neigeeinrichtung 68 geneigt werden, in den inaktiven Zustand, in dem die Neigeeinrichtung 68 keine Einwirkung auf die Signaturen 4 hat. Die Signatur 4, die neu heran transportiert wird, wird daraufhin mit ihrem Hauptfalz auf der Auflagefläche 6 des Stapeltisches 8 abgestellt. Anschließend wird die Neigeeinrichtung 68 aus ihrem inaktiven Zustand wieder in den aktiven Zustand geschaltet und ist bereits für die nächste Signatur 4.

Ist eine bestimmte Anzahl an Signaturen 4 auf der Auflagefläche 6 des Stapeltisches 8 abgestellt worden, werden die Signaturen 4 als Stapel von der zweiten Fördereinheit 56 weiter befördert. Anschließend werden in der Regel Stützbretter (nicht dargestellt) auf bekannte Weise links und rechts am Stapel eingesetzt und schließlich die gestapelten, zwischen den Stützbrettern aufgenommenen Signaturstapel zu einer Verpackungsstation (nicht dargestellt), bevorzugt einer Umreifungsstation, befördert. Während der eine Stapel an Signaturen 4 noch weitergefördert wird, können die weiteren einlaufenden Signaturen 4 bereits wieder zu einem neuen Stapel gestapelt werden. Somit ist gewährleistet, dass der Stapelvorgang nicht unterbrochen werden muss, sobald ein Stapel fertig gestapelt worden ist.

In der vorliegenden Beschreibung wurden horizontale und vertikale Ausrichtungen für bestimmte Elemente der vorliegenden Erfindung erwähnt. Die Erfindung ist auch auf Ausgestaltungen anwendbar, bei denen gewisse Abweichungen von diesen Ausrichtungen vorliegen.

Je nach Ausführungsform kann der Umlenkwinkel der Signatur-Bahn 12 auch mehr oder weniger als 270° betragen. Insbesondere ist es auch möglich, dass eine Umlenkung um lediglich ca. 90° stattfindet.

Die Steuereinrichtung 70 kann neben dem Signal des Sensors 76, dem Abstand zwischen Sensor 76 und Neigeeinrichtung 68 und der Geschwindigkeit, mit der die Signaturen 4 in den vertikalen Endabschnitt 44 einlaufen, auch weitere Prozessparameter zur Ansteuerung der Neigeeinrichtung 68 verwenden.

Die Neigeeinrichtung 68 war in der vorliegenden Beschreibung als mindestens ein Schiebestößel 72 gewählt. Sie kann aber auch andere mechanisch oder pneumatisch auf den Stapel wirkende Komponenten umfassen.

## Patentansprüche

1. Vorrichtung (2) zum Herstellen von Stapelpaketen, insbesondere in Form von Stangen, die eine Vielzahl von einzelnen Signaturen (4) aufweisen, mit
einer ersten Fördereinheit (10), die eine Signatur-Bahn (12) definiert, wobei die erste Fördereinheit (10) darauf ausgerichtet ist, die vereinzelten Signaturen (4) entlang der Signatur-Bahn (12) in eine im Wesentlichen vertikale Lage zu bewegen,
einem Stapeltisch (8) mit einer Auflagefläche (6) zum Stützen der im Wesentlichen vertikal herantransportierten Signaturen (4), wobei der Stapeltisch (8) eine zweite Fördereinheit (56) aufweist, die die in Form einer Stange gestapelten Signaturen (4) in einer Förderrichtung (F) des Stapels bewegt,
**dadurch gekennzeichnet, dass**
die Vorrichtung (2) eine Neigeeinrichtung (68) zum Neigen oder Zusammendrücken eines oberen Bereichs der gestapelten Signaturen (4) aufweist, wobei die Neigeeinrichtung (68) oberhalb der Auflagefläche (6) angeordnet ist und einen vorbestimmten vertikalen Abstand zur Auflagefläche (6) aufweist, und
die Vorrichtung (2) weiterhin eine Steuereinrichtung (70) aufweist, die dazu eingerichtet ist, die Neigeeinrichtung (68) zwischen einem aktiven Zustand, in dem die Neigeeinrichtung (68) die gestapelten Signaturen (4) neigt, und einem inaktiven Zustand, in dem keine Einwirkung der Neigeeinrichtung (68) auf die gestapelten Signaturen (4) stattfindet, zu schalten.

2. Vorrichtung (2) nach Anspruch 1, **dadurch gekennzeichnet, dass** die Neigeeinrichtung (68) höhenverstellbar angeordnet ist.

3. Vorrichtung (2) nach Anspruch 1 oder 2, **dadurch gekennzeichnet, dass** der vorbestimmte vertikale Abstand zwischen der Neigeeinrichtung (68) und der Auflagefläche (6) zwischen 6 cm und 30 cm beträgt.

4. Vorrichtung (2) nach einem der vorangehenden Ansprüche, **dadurch gekennzeichnet, dass** die Signatur-Bahn (12) eine Umlenkung der Signaturen (4) um im Wesentlichen 270° bewirkt.

5. Vorrichtung (2) nach einem der vorangehenden Ansprüche, **dadurch gekennzeichnet, dass** die Vorrichtung (2) einen Sensor (76) aufweist, der stromauf der Neigeeinrichtung (68) im Bereich der Signatur-Bahn (12) angeordnet ist und darauf ausgerichtet ist, einen Durchtritt jeder Signatur (4) festzustellen und ein entsprechendes Signal an die Steuereinrichtung (70) zu übermitteln.

6. Vorrichtung (2) nach Anspruch 5, **dadurch gekennzeichnet, dass** die Steuereinheit (70) darauf ausgerichtet ist, auf Basis des Sensorsignals, der Geschwindigkeit der ersten Fördereinheit (10) und eines Abstands zwischen dem Sensor (76) und der Neigeeinrichtung (68) die Neigeeinrichtung (68) in den inaktiven Zustand und anschließend wieder in den aktiven Zustand zu schalten.

7. Vorrichtung (2) nach Anspruch 5 oder 6, **dadurch gekennzeichnet, dass** die Signatur-Bahn (12) oberhalb der Auflagefläche (6) einen vertikalen Endabschnitt (44) aufweist und der Sensor (76) stromauf des vertikalen Endabschnitts (44) und nahe am vertikalen Endabschnitt (44) angeordnet ist.

8. Vorrichtung (2) nach einem der vorangehenden Ansprüche, **dadurch gekennzeichnet, dass** die Neigeeinrichtung (68) mindestens einen Schiebestößel (72) aufweist.

9. Vorrichtung nach Anspruch 8, **dadurch gekennzeichnet, dass** der mindestens eine Schiebestößel (72) ein kantenfreies Profil aufweist.

10. Vorrichtung nach Anspruch 8 oder 9, **dadurch gekennzeichnet, dass** der mindestens eine Schiebestößel (72) in dem aktiven Zustand in Förderrichtung (F) des Stapels über einen vertikalen Endabschnitt (44) der Signatur-Bahn (12) hinaus ausgefahren ist, während er in dem inaktiven Zustand hinter den vertikalen Endabschnitt (44) der Signatur-Bahn (12) zurückgezogen ist und somit die Signaturen (4) nicht berührt.

11. Vorrichtung nach einem der vorangehenden Ansprüche, **dadurch gekennzeichnet, dass** die Neigeeinrichtung (68) die Signaturen (4) in einer Neigerichtung, die der Förderrichtung (F) des Stapels entspricht, neigt.

12. Verfahren zum Herstellen von Stapelpaketen, insbesondere in Form von Stangen, die eine Vielzahl von einzelnen Signaturen (4) aufweisen, mit folgenden Schritten:
Fördern von vereinzelten Signaturen (4) entlang einer Signatur-Bahn (12) mit einer ersten Fördereinheit (10), wobei die Signaturen (4) in eine vertikale Lage gebracht werden,
anschließendes Abstellen der vertikal herantransportierten Signaturen (4) auf einer Auflagefläche (6) eines Stapeltisches (8) zur Bildung eines Stapels von Signaturen (4), und
Weiterfördern der gestapelten Signaturen (4) in einer Förderrichtung (F) des Stapels mittels einer zweiten Fördereinheit (56),
**dadurch gekennzeichnet,**
**dass** bei der Stapelbildung eine Neigeeinrichtung (68) zwischen einem aktiven Zustand, in dem die Neigeeinrichtung (68) einen oberen Bereich der gestapelten Signaturen (4) neigt oder zusammendrückt, und einem inaktiven Zustand, in dem keine Einwirkung der Neigeeinrichtung (68) auf die gestapelten Signaturen (4) stattfindet, geschaltet wird.

13. Verfahren nach Anspruch 12, **dadurch gekennzeichnet, dass** ein Sensor (76) zum Feststellen eines Durchtritts einer Signatur (4) und zum Senden eines entsprechenden Signals an eine Steuereinrichtung (70) stromauf der Neigeeinrichtung (68) im Bereich der Signatur-Bahn (12) angeordnet ist, wobei die Steuereinrichtung (70) die Neigeeinrichtung (68) auf Basis des Sensorsignals, der Geschwindigkeit der ersten Fördereinheit (10) und eines Abstands zwischen dem Sensor (76) und der Neigeeinrichtung (68) in den inaktiven Zustand und anschließend wieder in den aktiven Zustand schaltet.

14. Verfahren nach Anspruch 12 oder 13, **dadurch gekennzeichnet, dass** die Neigeeinrichtung (68) mindestens einen Schiebestößel (72) aufweist, der beim Schalten in den aktiven Zustand in Förderrichtung (F) des Stapels über einen vertikalen Endabschnitt (44) der Signatur-Bahn (12) hinaus ausgefahren wird, während er in dem inaktiven Zustand hinter den vertikalen Endabschnitt (44) der Signatur-Bahn (12) zurückgezogen wird und somit die gestapelten Signaturen (4) nicht berührt.

15. Verfahren nach einem der Ansprüche 12 bis 14, **dadurch gekennzeichnet, dass** die Neigeeinrichtung (68) die Signaturen (4) in einer Neigerichtung, die der Förderrichtung (F) des Stapels entspricht, neigt.

## Claims

1. Apparatus (2) for producing stacked assemblies, in particular in the form of blocks which comprise a plurality of individual signatures (4), comprising
a first conveying unit (10) which defines a signature path (12), wherein the first conveying unit (10) is aimed at moving the separated signatures (4) along the signature path (12) into a substantially vertical position,
a stacking table (8) with a support surface (6) for supporting the substantially vertically transported-in signatures (4), wherein the stacking table (8) comprises a second conveying unit (56) which moves the signatures (4) stacked in the form of a block in a conveying direction (F),
**characterized in that**
the apparatus (2) comprises a tilting device (68) for tilting or compressing an upper region of the stacked signatures (4), wherein the tilting device (68) is arranged above the support surface (6) and has a predetermined vertical spacing from the support surface (6), and
the apparatus (2) further comprises a control device (70) which is configured to switch the tilting device (68) between an active state, in which the tilting device (68) tilts the stacked signatures (4), and an inactive state, in which no effect of the tilting device (68) on the stacked signatures (4) takes place.

2. Apparatus (2) according to Claim 1, **characterized in that** the tilting device (68) is arranged height-adjustably.

3. Apparatus (2) according to Claim 1 or 2, **characterized in that** the predetermined vertical spacing between the tilting device (68) and the support surface (6) is between 6 cm and 30 cm.

4. Apparatus (2) according to one of the preceding claims, **characterized in that** the signature path (12) brings about a deflection of the signatures (4) through substantially 270°.

5. Apparatus (2) according to one of the preceding claims, **characterized in that** the apparatus (2) comprises a sensor (76) which is arranged upstream of the tilting device (68) in the region of the signature path (12) and is aimed at detecting a passage of each signature (4) and transmitting a corresponding signal to the control device (70).

6. Apparatus (2) according to Claim 5, **characterized in that** the control unit (70) is aimed, on the basis of the sensor signal, the speed of the first conveying unit (10) and a spacing between the sensor (76) and the tilting device (68), at switching the tilting device (68) into the inactive state and then again into the active state.

7. Apparatus (2) according to Claim 5 or 6, **characterized in that** the signature path (12) comprises a vertical end section (44) above the support surface (6) and the sensor (76) is arranged upstream of the vertical end section (44) and close to the vertical end section (44).

8. Apparatus (2) according to one of the preceding claims, **characterized in that** the tilting device (68) comprises at least one pushrod (72).

9. Apparatus according to Claim 8, **characterized in that** the at least one pushrod (72) has an edge-free profile.

10. Apparatus according to Claim 8 or 9, **characterized in that**, in the active state, the at least one pushrod (72) is extended in the conveying direction (F) of the stack beyond a vertical end section (44) of the signature path (12), whereas, in the inactive state, it is retracted behind the vertical end section (44) of the signature path (12) and thus does not contact the signatures (4).

11. Apparatus according to one of the preceding claims, **characterized in that** the tilting device (68) tilts the signatures (4) in a tilting direction which corresponds to the conveying direction (F) of the stack.

12. Method for producing stacked assemblies, in particular in the form of blocks which comprise a plurality of individual signatures (4), comprising the following steps:
conveying separated signatures (4) along a signature path (12) with a first conveying unit (10), wherein the signatures (4) are brought into a vertical position,
subsequently depositing the vertically transported-in signatures (4) on a support surface (6) of a stacking table (8) to form a stack of signatures (4), and
further conveying the stacked signatures (4) in a conveying direction (F) of the stack by means of a second conveying unit (56),
**characterized in that**,
during the stack formation, a tilting device (68) is switched between an active state, in which the tilting device (68) tilts or compresses an upper region of the stacked signatures (4), and an inactive state, in which no effect of the tilting device (68) on the stacked signatures (4) takes place.

13. Method according to Claim 12, **characterized in that** a sensor (76) for detecting a passage of a signature (4) and for sending a corresponding signal to a control device (70) is arranged upstream of the tilting device (68) in the region of the signature path (12), wherein, on the basis of the sensor signal, the speed of the first conveying unit (10) and a spacing between the sensor (76) and the tilting device (68), the control device (70) switches the tilting device (68) into the inactive state and then again into the active state.

14. Method according to Claim 12 or 13, **characterized in that** the tilting device (68) comprises at least one pushrod (72) which, during the switching into the active state, is extended in the conveying direction (F) of the stack beyond a vertical end section (44) of the signature path (12), whereas, in the inactive state, it is retracted behind the vertical end section (44) of the signature path (12) and thus does not contact the stacked signatures (4).

15. Method according to one of Claims 12 to 14, **characterized in that** the tilting device (68) tilts the signatures (4) in a tilting direction which corresponds to the conveying direction (F) of the stack.

## Revendications

1. Dispositif (2) de fabrication de paquets empilés, en particulier sous forme de barres, qui présentent une pluralité de différentes signatures (4), comprenant
une première unité de transport (10) qui définit une bande de signatures (12), la première unité de transport (10) visant à déplacer les signatures (4) individuelles le long de la bande de signatures (12) dans une position sensiblement verticale,
une table d'empilage (8) présentant une surface d'appui (6) servant à soutenir les signatures (4) transportées sensiblement verticalement, la table d'empilage (8) comprenant une deuxième unité de transport (56) qui déplace les signatures (4) empilées sous forme de barre dans une direction de transport (F) de la pile,
**caractérisé en ce que**
le dispositif (2) comprend un système d'inclinaison (68) servant à incliner ou à comprimer une zone supérieure des signatures (4) empilées, le système d'inclinaison (68) étant agencé au-dessus de la surface d'appui (6) et présentant un écart vertical prédéfini par rapport à la surface d'appui (6), et
le dispositif (2) comprend en outre un système de commande (70) qui est conçu pour faire passer le système d'inclinaison (68) entre un état actif, dans lequel le système d'inclinaison (68) incline les signatures (4) empilées, et un état inactif, dans lequel le système d'inclinaison (68) n'exerce aucun effet sur les signatures (4) empilées.

2. Dispositif (2) selon la revendication 1, **caractérisé en ce que** le système d'inclinaison (68) est agencé de manière à être réglable en hauteur.

3. Dispositif (2) selon la revendication 1 ou 2, **caractérisé en ce que** l'écart vertical prédéfini entre le système d'inclinaison (68) et la surface d'appui (6) est compris entre 6 cm et 30 cm.

4. Dispositif (2) selon l'une quelconque des revendications précédentes, **caractérisé en ce que** la bande de signatures (12) provoque une déviation des signatures (4) de sensiblement 270°.

5. Dispositif (2) selon l'une quelconque des revendications précédentes, **caractérisé en ce que** le dispositif (2) comprend un capteur (76) qui est agencé en amont du système d'inclinaison (68) dans la zone de la bande de signatures (12) et qui vise à identifier un passage de chaque signature (4) et à transmettre un signal correspondant au système de commande (70).

6. Dispositif (2) selon la revendication 5, **caractérisé en ce que** l'unité de commande (70) vise à faire passer le système d'inclinaison (68) dans l'état inactif puis à nouveau dans l'état actif sur la base du signal de capteur, de la vitesse de la première unité de transport (10) et d'un écart entre le capteur (76) et le système d'inclinaison (68).

7. Dispositif (2) selon la revendication 5 ou 6, **caractérisé en ce que** la bande de signatures (12) comprend au-dessus de la surface d'appui (6) une section d'extrémité verticale (44) et le capteur (76) est agencé en amont de la section d'extrémité verticale (44) et à proximité de la section d'extrémité verticale (44).

8. Dispositif (2) selon l'une quelconque des revendications précédentes, **caractérisé en ce que** le système d'inclinaison (68) comprend au moins un poussoir coulissant (72).

9. Dispositif selon la revendication 8, **caractérisé en ce que** le ou les poussoirs coulissants (72) présentent un profil sans bord.

10. Dispositif selon la revendication 8 ou 9, **caractérisé en ce que** le ou les poussoirs coulissants (72), dans l'état actif, sont sortis dans la direction de transport (F) de la pile au-delà d'une section d'extrémité verticale (44) de la bande de signatures, tandis que, dans l'état inactif, ils sont en retrait derrière la section d'extrémité verticale (44) de la bande de signatures (12) et ne sont donc pas en contact avec les signatures (4).

11. Dispositif selon l'une quelconque des revendications précédentes, **caractérisé en ce que** le système d'inclinaison (68) incline les signatures (4) dans une direction d'inclinaison qui correspond à la direction de transport (F) de la pile.

12. Procédé de fabrication de paquets de piles, en particulier sous forme de barres, qui présentent une pluralité de différentes signatures (4), comprenant les étapes suivantes consistant à :
transporter les différentes signatures (4) le long d'une bande de signatures (12) au moyen d'une première unité de transport (10), les signatures (4) étant amenées dans une position verticale,
puis mettre en place les signatures (4) transportées verticalement sur une surface d'appui (6) d'une table d'empilage (8) pour former une pile de signatures (4), et
continuer de transporter les signatures (4) empilées dans une direction de transport (F) de la pile au moyen d'une deuxième unité de transport (56),
**caractérisé en ce que**
lors de la formation de la pile, un système d'inclinaison (68) est amené à passer entre un état actif, dans lequel le système d'inclinaison (68) incline ou comprime une zone supérieure des signatures (4) empilées, et un état inactif, dans lequel le système d'inclinaison (68) n'exerce aucun effet sur les signatures (4) empilées.

13. Procédé selon la revendication 12, **caractérisé en ce qu'**un capteur (76) servant à identifier un passage d'une signature (4) et à envoyer un signal correspondant à un système de commande (70) est agencé en amont du système d'inclinaison (68) dans la zone de la bande de signatures (12), le système de commande (70) faisant passer le système d'inclinaison (68) dans l'état inactif puis à nouveau dans l'état actif sur la base du signal de capteur, de la vitesse de la première unité de transport (10) et d'un écart entre le capteur (76) et le système d'inclinaison (68).

14. Procédé selon la revendication 12 ou 13, **caractérisé en ce que** le système d'inclinaison (68) comprend au moins un poussoir coulissant (72) qui, lors du passage dans l'état actif, est sorti dans la direction de transport (F) de la pile au-delà d'une section d'extrémité verticale (44) de la bande de signatures (44), tandis que dans l'état inactif, ledit poussoir est en retrait derrière la section d'extrémité verticale (44) de la bande de signatures (12) et n'est donc pas en contact avec les signatures (4) empilées.

15. Procédé selon l'une quelconque des revendications 12 à 14, **caractérisé en ce que** le système d'inclinaison (68) incline les signatures (4) dans une direction d'inclinaison qui correspond à la direction de transport (F) de la pile.
